# FASCICULE DE BREVET EUROPEEN

(11) **EP 2 801 303 B1**
(45) Date de publication et mention de la délivrance du brevet: **19.06.2019**
(21) Numéro de dépôt: 14166971.3
(22) Date de dépôt: 05.05.2014
(51) Int. Cl.: A47J 27/08, A47J 43/07, A47J 27/09

(54) **Joint pour autocuiseur à ouverture traversante**
Dichtung für Schnellkochtopf mit durchgehender Öffnung
Seal for pressure cooker with through opening

(30) Priorité: 06.05.2013 FR 1354151
(43) Date de publication de la demande: 12.11.2014
(73) Titulaire: SEB S.A., 69130 Ecully (FR)
(72) Inventeur: Chameroy, Eric, 21260 Veronnes (FR); Bouye, Nathalie Mireille Marie-Jésus, 52200 Langres (FR); Chaillard, Hubert Roger Bernard, 52250 Longeau (FR)
(74) Mandataire: Weber, Jean-François

(56) Documents cités:
- CN-Y- 2 284 025
- DE-U1-202008 011 482
- FR-A1- 2 940 389

## Description

La présente invention se rapporte au domaine technique général des appareils de cuisson d'aliments sous pression dans une atmosphère chargée en vapeur, de préférence à usage domestique, et en particulier aux appareils dénommés cuiseur-vapeur ou autocuiseur, et plus particulièrement aux joints d'étanchéité destinés à être mis en place dans de tels appareils entre la cuve et le couvercle pour assurer, en fonctionnement, l'étanchéité entre l'intérieur et l'extérieur de l'appareil.

La présente invention concerne ainsi un joint d'étanchéité pour appareil de cuisson d'aliments sous pression comprenant une cuve se terminant à sa partie supérieure par un rebord de cuve ainsi qu'un couvercle destiné à être rapporté sur ladite cuve pour définir une enceinte de cuisson, ledit joint étant conçu pour être interposé entre le couvercle et le rebord de la cuve afin d'assurer l'étanchéité de ladite enceinte de cuisson et comportant un talon à partir duquel s'étend au moins une première lèvre comprenant une surface d'appui se terminant par une bordure terminale destinée à reposer sur le rebord de cuve.

La présente invention concerne également un appareil de cuisson d'aliments sous pression équipé ou susceptible d'être équipé d'un joint d'étanchéité conforme à l'invention.

La présente invention concerne enfin une méthode de dépressurisation sécuritaire d'un appareil de cuisson d'aliments sous pression comprenant une cuve se terminant à sa partie supérieure par un rebord de cuve ainsi qu'un couvercle destiné à être rapporté sur ladite cuve pour définir une enceinte de cuisson, ledit appareil comprenant un joint d'étanchéité interposé entre le couvercle et le rebord de la cuve, ladite méthode comportant une étape de fluage du joint lorsque la pression à l'intérieur de ladite enceinte de cuisson dépasse un seuil prédéterminé Pₛ de sorte à mettre ladite enceinte de cuisson en communication avec l'extérieur.

Il est déjà connu d'avoir recours à des joints d'étanchéité, par exemple en matériaux élastomères, qui sont interposés et compressés entre la cuve et le couvercle des autocuiseurs pour assurer, en particulier grâce à leur souplesse et aptitude à la compression, l'étanchéité de l'appareil en fonctionnement.

Le document DE-20 2008 011482 U1 divulgue un appareil de cuisson équipé d'un joint d'étanchéité.

Les joints utilisés présentent des profils variables qui adaptés aux différents types d'appareils de cuisson sous pression et peuvent être qualifiés de joints de type corde ou encore de joint à lèvre.

Il est également connu d'utiliser de tels joints en tant que dispositifs de sécurité additionnels autorisant la mise en dépression de l'enceinte des appareils par fuite de vapeur hors de l'enceinte de cuisson. Il s'avère en effet que les dispositifs classiques et spécifiquement dédiés de sécurité d'appareils de cuisson sous pression tels des soupapes de sécurité peuvent être déficients, par obstruction, blocage ou autres disfonctionnements accidentels. Dans de telles situations, l'enceinte de cuisson peut être amenée à monter en pression en cours de fonctionnement sans que les dispositifs classiques de sécurité puissent jouer leur rôle en permettant la mise en dépression automatique de l'appareil dès qu'un incident de ce type se produit.

Dans de tels cas, il est alors déjà connu d'utiliser le joint d'étanchéité de l'appareil de cuisson sous pression en tant que moyen de sécurité additionnel en utilisant les propriétés de déformation naturelle du joint sous l'effet de la surpression régnant dans l'enceinte laquelle surpression va déplacer le joint hors sa position d'étanchéité pour permettre un échappement de vapeur conduisant à la mise en dépression de l'enceinte. Ce phénomène de déplacement et de déformation ponctuelle du joint des appareils de cuisson sous pression en cas de surpression et de déficience des dispositifs classiques de sécurité est bien connu de l'homme du métier sous le terme de ou l'expression « *fluage du joint* ».

Parmi les appareils de cuisson sous pression qui utilisent le phénomène de fluage du joint pour assurer une fonction sécuritaire additionnelle, on connait les systèmes mettant en oeuvre une déformation ou une extrusion du joint à travers une fenêtre ménagée dans le bord du couvercle ou encore les systèmes permettant une déformation du joint provoquée par des zones d'affaiblissements aménagées sur le contour du joint.

On connait également (EP-10 807708.2) un système de sécurité additionnel dans lequel la déformation du joint est provoquée par l'association de la souplesse d'une lèvre et la déformation élastique du couvercle, des encoches étant en outre ménagées à la périphérie intérieure de la lèvre du joint et à partir de sa bordure terminale.

La plupart des dispositifs de sécurité additionnels mettant en oeuvre le déplacement ou la déformation du joint d'étanchéité des appareils de cuisson sous pression donnent satisfaction et assurent en pratique l'évacuation de l'excès de pression ce qui confère à de tels appareils une très grande sécurité d'utilisation.

Les dispositifs de l'art antérieur peuvent néanmoins encore être améliorés car leur fonctionnement n'est pas toujours optimal.

On cherche en effet constamment à prévenir les désordres de fonctionnement qui peuvent survenir dans le fonctionnement de ces dispositifs de sécurité additionnels, lesquels désordres peuvent être à l'origine de gêne ou inconfort pour les utilisateurs.

En particulier, on cherche à éviter toute réaction violente dans le fonctionnement susceptible de générer des réactions violentes lors du déplacement du joint de sa position d'étanchéité vers sa position de non étanchéité, tels des jets de vapeur, des projections d'aliments ou de fluides voire même des déplacements de l'appareil.

Des solutions évitant des phénomènes brutaux et privilégiant une souplesse de fonctionnement sont de lors recherchées.

En outre, il s'avère que les solutions mettant par exemple en oeuvre des joints à lèvre, tel que celui décrit dans la demande de brevet EP-10 807708.2, peuvent encore être améliorées, en particulier sous l'aspect de la robustesse et de la fiabilité de conception. Il a en effet été constaté que le déplacement de la lèvre qui libère les encoches ménagées à sa périphérie pouvait être mal maitrisé et provoquer ainsi une dépressurisation plus ou moins violente de l'appareil.

Les objets assignés à la présente invention visent par conséquent à remédier aux différents inconvénients énumérés précédemment et à proposer un nouveau joint d'étanchéité ainsi qu'une nouvelle méthode de dépressurisation sécuritaire pour un appareil de cuisson d'aliment sous pression qui permettent, tout en assurant une excellente sécurité de fonctionnement en cas de surpression accidentelle, un fonctionnement particulièrement fiable, robuste et maîtrisé de l'appareil dans ces conditions particulières de surpression.

Un autre objet de l'invention vise à proposer un nouveau joint d'étanchéité et une nouvelle méthode de dépressurisation sécuritaire qui garantissent une mise en dépression régulière et dépourvue de réaction violente.

Un autre objet de l'invention vise à proposer un nouveau joint d'étanchéité et une nouvelle méthode de dépressurisation sécuritaire qui permettent une dépressurisation rapide mais maitrisée de l'appareil de cuisson d'aliments sous pression.

Les objets assignés à la présente invention visent enfin à proposer un nouveau joint d'étanchéité et une nouvelle méthode de dépressurisation sécuritaire qui puisse assurer la sécurité de fonctionnement de l'appareil de manière rapide sans pour autant générer un déplacement important du joint d'étanchéité.

Les objets assignés à l'invention sont atteints à l'aide d'un joint d'étanchéité pour appareil de cuisson d'aliments sous pression, ledit appareil comprenant une cuve se terminant à sa partie supérieure par un rebord de cuve ainsi qu'un couvercle destiné à être rapporté sur ladite cuve pour définir une enceinte de cuisson, ledit joint étant conçu pour être interposé entre le couvercle et le rebord de la cuve afin d'assurer l'étanchéité de ladite enceinte de cuisson et comportant un talon à partir duquel s'étend au moins une première lèvre comprenant une surface d'appui se terminant par une bordure terminale destinée à reposer sur le rebord de cuve, ledit joint étant caractérisé en ce que la première lèvre est percée d'au moins une ouverture traversante ménagée dans la surface d'appui à distance de la bordure terminale de telle sorte que la ladite première lèvre puisse d'une part reposer sur le rebord de cuve par sa surface d'appui lorsque la pression régnant dans l'enceinte de cuisson ne dépasse pas un seuil prédéterminé et d'autre part fluer en direction du talon lorsque la pression régnant dans l'enceinte de cuisson dépasse le seuil prédéterminé de sorte à mettre ladite au moins une ouverture traversante en communication avec l'extérieur de l'enceinte alors que la bordure terminale repose toujours sur le rebord de cuve.

Les objets assignés à l'invention sont également atteints à l'aide d'un appareil de cuisson d'aliments sous pression pourvu d'un joint d'étanchéité conforme à l'invention.

Les objets assignés à l'invention sont également atteints à l'aide d'une méthode de dépressurisation sécuritaire d'un appareil de cuisson d'aliments sous pression comprenant une cuve se terminant à sa partie supérieure par un rebord de cuve ainsi qu'un couvercle destiné à être rapporté sur ladite cuve pour définir une enceinte de cuisson, ledit appareil comportant un joint d'étanchéité interposé entre le couvercle et le rebord de la cuve, ladite méthode comportant une étape de fluage du joint lorsque la pression à l'intérieur de ladite enceinte de cuisson dépasse un seuil prédéterminé de sorte à mettre ladite enceinte de cuisson en communication avec l'extérieur et étant caractérisée en ce que, ledit joint étant formé par un talon à partir duquel s'étend au moins une première lèvre comprenant une surface d'appui se terminant par une bordure terminale destinée à reposer sur le rebord de cuve afin d'assurer l'étanchéité de ladite enceinte de cuisson, l'étape de fluage du joint s'effectue en deux phases successives incluant d'abord une première phase de déplacement de ladite première lèvre dans un plan sensiblement parallèle au plan général d'extension du rebord de cuve, suivie par une seconde phase de déplacement au cours de laquelle la première lèvre fléchit en direction du couvercle pour former un pli et rompre l'étanchéité alors que la bordure terminale repose toujours sur le rebord de cuve.

D'autres objets et avantages de l'invention apparaîtront et ressortiront plus en détails à la lecture de la description qui suit, en référence aux dessins annexés, donnés à titre purement illustratif et non limitatif, parmi lesquels :
- La figure 1 illustre selon une vue en perspective une variante de réalisation préférentielle d'un joint d'étanchéité conforme à l'invention.
- La figure 2 illustre un détail de réalisation d'une ouverture traversante réalisée dans un joint d'étanchéité conforme à l'invention.
- La figure 3 illustre selon une vue en coupe transversale partielle, la position d'un joint d'étanchéité conforme à l'invention dans un autocuiseur et occupant sa position d'étanchéité.
- La figure 4 illustre selon une vue en coupe transversale partielle identique à celle de la figure 3, la position d'un joint d'étanchéité conforme à l'invention au cours de la première phase de son déplacement en cas de surpression accidentelle.
- La figure 5 illustre selon une vue en coupe transversale partielle identique à celle des figures 3 et 4, la position d'un joint d'étanchéité conforme à l'invention au cours de la seconde phase de son déplacement en cas de surpression accidentelle et permettant un échappement de vapeur vers l'extérieur de l'enceinte de cuisson.

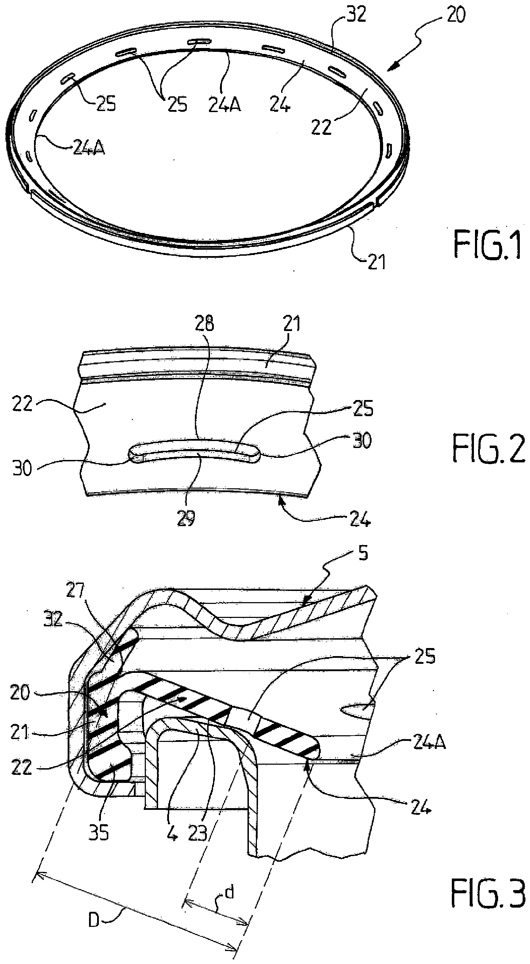

Le joint d'étanchéité 20 conforme à l'invention est destiné à équiper un appareil de cuisson sous pression, de préférence à usage domestique, tel qu'un autocuiseur comportant tel qu'illustré partiellement aux figures 3 à 4 au moins une cuve 2 pourvue d'un fond (non représenté) à partir duquel s'élève une paroi latérale 3 se terminant à sa partie supérieure par un rebord 4 de cuve 2. L'appareil de cuisson comporte également un couvercle 5 destiné à être rapporté sur la cuve 2 pour former une enceinte de cuisson étanche.

A titre purement illustratif, l'appareil de cuisson d'aliments sous pression conforme à l'invention peut comporter une cuve 2 de forme sensiblement cylindrique ainsi qu'un couvercle 5 de forme sensiblement circulaire, étant entendu qu'à titre de variante, la cuve 2 et le couvercle 5 peuvent évidemment être de toutes formes géométriques différentes mais complémentaires, et par exemple ovale notamment, sans sortir du cadre de l'invention.

La cuve 2 et l'ossature principale du couvercle 5 sont réalisées, de manière connue, à partir d'un matériau métallique, tel que l'acier inoxydable, la cuve 2 étant pourvue d'un fond (non représenté) apte à diffuser la chaleur.

L'appareil de cuisson d'aliments sous pression comporte également un ou plusieurs dispositifs de verrouillage/déverrouillage du couvercle 5 sur la cuve 2 permettant à l'utilisateur de verrouiller le couvercle 5 sur la cuve 2 pour assurer la cuisson des aliments à l'intérieur de l'enceinte ou pour déverrouiller l'appareil et avoir ainsi accès à l'intérieur de la cuve 2.

Le dispositif de verrouillage/déverrouillage de l'appareil pourra être formé par tous dispositifs classiques bien connus de l'homme du métier et être par exemple formé d'au moins une et de préférence deux mâchoires de verrouillage montées mobiles sur le couvercle sans que ce nombre soit pour autant limitatif. Bien évidemment, d'autres dispositifs de verrouillage peuvent être employés sans pour autant sortir du cadre de l'invention, et par exemple des systèmes de verrouillage à baïonnettes, à segments traversant, à étrier ou autre.

Tel qu'illustré aux figures 3 à 4, le rebord 4 de cuve 2 forme la partie terminale de la paroi 3 et s'étend par exemple radialement vers l'extérieur de la cuve 2. Avantageusement, le rebord 4 de cuve 2 est sensiblement plan et forme ainsi une surface annulaire définissant une surface de repos R.

Au sens de l'invention, et par commodité, on distinguera la direction radiale interne F1 correspondant à une direction ou à un sens radial dirigé vers l'axe central de l'appareil, la direction radiale externe F2 dirigée vers l'extérieur de l'appareil, c'est-à-dire en éloignement de son axe central lequel est formé par l'axe de révolution de la cuve 2 et du couvercle 5.

Tel qu'illustré aux figures 3 à 5, le rebord 4 de cuve 2 peut être avantageusement pourvu d'un bord tombé 4A prolongeant le rebord 4 de cuve 2 et s'étendant à distance de la paroi 3, et par exemple sensiblement parallèlement.

Tel qu'illustré aux figures 3 à 4 et de manière purement optionnelle, le couvercle 5 est formé d'un disque métallique, de préférence annulaire, pouvant comporter une conformation 8 formant par exemple un bossage s'étendant sur tout le périmètre du couvercle 5. Avantageusement le bossage 8 se poursuit en direction radiale interne F2 par une cuvette circulaire 9 formant une dépression et en direction radiale externe F1 par une bordure 10 tombante qui se prolonge avantageusement par une bordure repliée 11 sensiblement à angle droit selon la direction F1 de manière à constituer un logement 12 qui s'étend sur tout le périmètre du couvercle 5.

L'étanchéité de l'appareil de cuisson sous pression est obtenue par interposition d'un joint d'étanchéité 20 qui est interposé entre le couvercle 5 et la cuve 2 de manière à réaliser l'étanchéité entre ledit couvercle 5 et ladite cuve 2 de manière à réaliser une enceinte de cuisson étanche lorsque le couvercle 5 est verrouillé sur la cuve 2 par les dispositifs de verrouillage/déverrouillage.

Le joint d'étanchéité 20 est réalisé en un matériau élastomère et présente une souplesse naturelle de manière à pouvoir être comprimé pour réaliser l'étanchéité nécessaire.

Tel qu'illustré aux figures, le joint d'étanchéité 20 conforme à l'invention est conçu pour être interposé entre le couvercle 5 et le rebord 4 de cuve 2 afin d'assurer l'étanchéité de l'enceinte de cuisson et il comporte un talon 21 destiné à être monté et supporté dans le logement 12. Le joint d'étanchéité 20 comporte ainsi un talon 21 à partir duquel s'étend, en direction radiale interne F1, au moins une première lèvre 22 comprenant une surface d'appui 23 se terminant par une bordure terminale 24 destinée à reposer sur le rebord 4 de cuve 2, ladite bordure terminale 24 étant délimitée extérieurement par une bordure continue 24A.

La figure 3 illustre ainsi une position du joint d'étanchéité 20 dans laquelle le joint d'étanchéité étant au repos, la première lèvre 22 définit une surface annulaire et vient reposer sur le rebord 4 de cuve 2 par sa surface d'appui 23 formant la face inférieure de la première lèvre 22.

Selon une caractéristique importante de l'invention, la première lèvre 22 est percée d'au moins une ouverture traversante 25 ménagée dans et à travers la surface d'appui 22 à distance de la bordure terminale 24 de telle sorte que ladite première lèvre 22 puisse d'une part reposer sur le rebord 4 de cuve 2 par sa surface d'appui 23 lorsque la pression régnant dans l'enceinte de cuisson ne dépasse pas un seuil prédéterminé Pₛ et d'autre part fluer en direction du talon 21 lorsque la pression régnant dans l'enceinte de cuisson dépasse le seuil prédéterminé Pₛ de sorte à mettre ladite au moins une ouverture traversante 25 en communication avec l'extérieur de l'enceinte alors que la bordure terminale 24 repose toujours sur le rebord 4 de cuve 2.

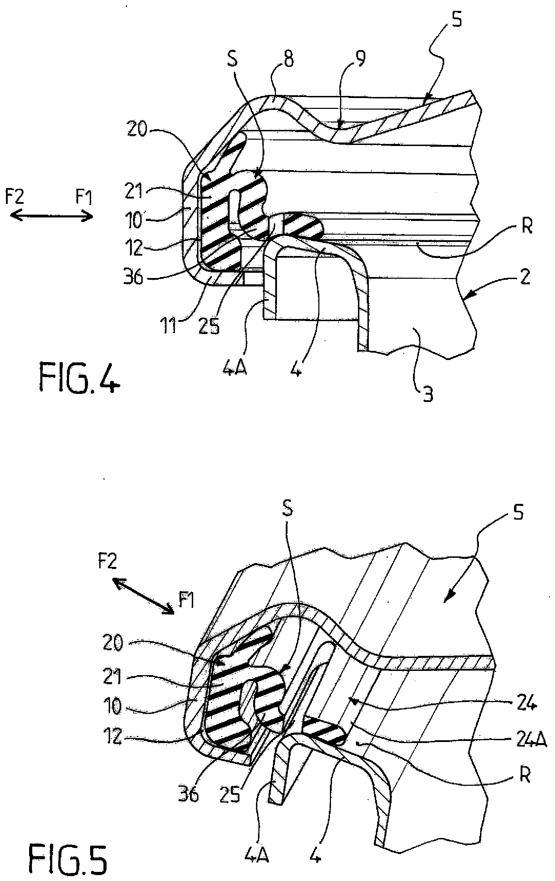

Ainsi, les caractéristiques structurelles du joint d'étanchéité 20 permettent à la ou aux ouverture(s) traversante(s) 25 d'être obturées lors du fonctionnement normal de l'appareil puisque la première lèvre 22 repose par sa surface d'appui 23 contre le rebord 4 de cuve 2 sur la surface de repos R de telle sorte que les ouvertures traversantes sont bouchées. Cette situation perdure dès lors qu'il règne à l'intérieur de l'enceinte de cuisson une pression de fonctionnement Pₛ inférieure ou au moins égale à la valeur critique de pression de fonctionnement. Au contraire, lorsque la pression critique de fonctionnement Pₛ est dépassée et que les dispositifs classiques de sécurité et de régulation de pression n'ont pas, pour une raison ou une autre, fonctionné, la première lèvre 22 se déplace sous l'effet de la pression en direction radiale externe F2 de telle sorte que la ou les ouvertures traversantes 25 ne reposent plus sur le rebord 4 de cuve 2 et sont par conséquent découvertes et libres de laisser passer vers l'extérieur l'excès de pression ou de vapeur régnant dans l'enceinte. Dans cette position d'échappement de vapeur illustrée à la figure 5, l'intérieur de l'enceinte de cuisson est mis en communication avec l'extérieur de l'enceinte par l'intermédiaire de la ou des ouvertures traversantes 25 alors que la bordure terminale 24 repose toujours sur le rebord 4 de cuve 2 ce qui évite tout risque d'échappement de ladite première lèvre 22 et permet un échappement de pression particulièrement maitrisé et non violent.

Ainsi, le joint d'étanchéité 20 conforme à l'invention est pourvu d'une première lèvre 22 de forme annulaire sensiblement plane et de dimensions appropriées de sorte à reposer sur et à être en contact sensiblement continu avec le rebord 4 de cuve 2 par l'intermédiaire de sa face inférieure formant la surface d'appui 23.

Tel qu'illustré en particulier à la figure 1, le joint d'étanchéité 20 se présente par exemple sous la forme d'un joint circulaire souple bordé extérieurement par le talon 21 et avec une première lèvre 22 qui s'étend en direction radiale interne F1 sur une profondeur D (Fig. 3) à partir de sa racine 27.

Dans la position du joint illustré aux figures 1 et 3, le contact continu entre la surface d'appui 23 et le rebord 4 de cuve 2 est obtenu lorsque le joint est en position dans son logement 12 et que la pression interne régnant dans l'autocuiseur correspond à une pression normale de fonctionnement inférieure au seuil prédéterminé Pₛ.

Tel qu'illustré en particulier à la figure 1, le joint d'étanchéité conforme à l'invention est percé d'une pluralité d'ouvertures traversantes 25. On obtient ainsi une fuite importante de vapeur tout en augmentant la sécurité de fonctionnement et la garantie d'assurer une bonne sécurité.

De manière avantageuse, les ouvertures traversantes 25 sont réparties à intervalles réguliers sur la totalité de la surface d'appui 23. On obtient ainsi un fonctionnement particulièrement équilibré et maîtrisé du déplacement du joint et de l'échappement de vapeur correspondant.

De manière particulièrement avantageuse, la ou les ouvertures traversantes 25 telles qu'illustrées aux figures 1 et 2 notamment, ont une forme générale sensiblement oblongue orientée selon la direction de la longueur de la surface d'appui 23. Les ouvertures traversantes 25 sont également avantageusement identiques.

Sur la figure 1 on voit en effet que la forme oblongue des ouvertures traversantes 25 présente de manière générale une forme qui est plus longue selon la direction de la longueur ou du périmètre du joint alors que la largeur de chaque ouverture traversante 25 est plus réduite en considérant la direction donnée par la profondeur de la lèvre correspondant à la distance D (figure 3).

Tel qu'illustré aux figures, le grand axe d'extension de chaque ouverture traversante 25 est sensiblement courbe dans le cas d'un joint circulaire ou ovale dans le cas d'un joint ovale par exemple.

Selon une variante de réalisation particulièrement intéressante, la ou les ouvertures traversantes (figure 2) 25 ont une forme générale de haricot avec un coté convexe 28 et un coté concave 29, chaque côté 28, 29 étant relié à l'autre par un demi cylindre 30. Avantageusement, le coté convexe 28 forme le coté extérieur convexe faisant face au talon 21 et le coté concave 29 forme le coté intérieur concave faisant face à la bordure terminale 24.

Au sens de l'invention, la bordure terminale 24 est définie comme étant la portion terminale de la première lèvre 22 située à l'opposé du talon 21 de profondeur d (figure 3) définie comme étant la distance entre la bordure continue 24A de la bordure terminale 24 et la limite interne de l'ouverture traversante 25.

Au sens de l'invention, la bordure terminale 24 de la première lèvre 22 reste constamment en appui sur ou contre le rebord 4 de cuve 2 même après avoir subi un fluage en cas de surpression accidentelle au sein de l'appareil de cuisson sous pression.

De manière particulièrement avantageuse, la première lèvre 22 a une souplesse suffisante et s'étend à partir du talon 21 sur une distance suffisante D pour venir fluer en formant un pli en S (inversé sur les figures) à partir de sa racine 27 avec le talon 21 tandis que la bordure terminale 24 repose sur le rebord 4 de cuve 2 et que ladite au moins une ouverture traversante 25 forme une section de fuite située entre le rebord 4 de cuve 2 (par exemple 4A) et le couvercle 5.

Les caractéristiques dimensionnelles et structurelles du joint permettent ainsi en combinaison et successivement, d'abord une déformation globale de la première lèvre 22 avec formation progressive d'un pli en S à partir de la racine 27 puis ensuite la libération progressive des ouvertures traversantes 25 ce qui assure une libération particulièrement douce de l'excès de pression alors que la première lèvre 22 garde un contact continu sur toute la périphérie du rebord 4 de cuve 2 par sa bordure terminale 24, c'est-à-dire sans aucune interruption de son support. On garantit ainsi tout échappement du joint ce qui augmente et garanti sa sécurité de fonctionnement.

Avantageusement, le joint selon l'invention peut être circulaire ou ovale et il comporte 15 ouvertures traversantes 25 sensiblement identiques, d'une longueur hors tout comprise entre 15 mm et 18 mm.

A titre de variante préférentielle, et tel qu'illustré aux figures, le joint 20 comporte une seconde lèvre 32 s'étendant à partir du talon 21 et destinée à venir en appui contre le couvercle 5 tel qu'illustré aux figures. La seconde lèvre 32 est avantageusement plus courte que la première lèvre 22 et s'étend à partir du talon 21 au voisinage de la racine 27 de manière à former un V avec la première lèvre 22. La seconde lèvre 32 est destinée à venir en appui contre la face intérieure du couvercle 25 pour parfaire et améliorer l'étanchéité du joint.

Avantageusement, et tel qu'illustré aux figures, le talon 21 peut comporter en sa partie inférieure opposée à la racine 27 une excroissance 35 destinée à reposer contre la bordure repliée 11 et formant un jonc périphérique apte à renforcer et stabiliser le joint.

Avantageusement, la bordure terminale 24 est bordée par une bordure continue 24A formant une ligne dépourvue d'encoche ou d'entailles. L'absence de discontinuité dans le profil de la première lèvre 22 à son extrémité en contact avec le rebord 4 de cuve 2 évite ainsi toute possibilité d'échappement de la lèvre en cas de surpression accidentelle ce qui permet de garantir une mise en dépression douce de l'appareil.

Lors du fonctionnement de l'autocuiseur, c'est-à-dire lorsque le couvercle 5 est rapporté est verrouillé sur la cuve 2 par le dispositif de verrouillage, la pression à l'intérieur de l'enceinte de cuisson s'élève progressivement jusqu'à atteindre une pression normale de fonctionnement permettant au liquide présent dans la cuve 2 d'assurer la cuisson des aliments sous pression de vapeur. Des dispositifs de sécurité conventionnels et dédiés permettent de réguler la pression de fonctionnement de l'appareil, tels une soupape de régulation, et d'éviter que la pression de fonctionnement dépasse un seuil prédéterminé Pₛ. Les dispositifs classiques et conventionnels de régulation de la pression des appareils de cuisson d'aliments sous pression peuvent néanmoins parfois être déficients, par obstruction, blocage ou pour d'autres raisons de telle sorte que le joint d'étanchéité assure alors, en plus de sa fonction première d'étanchéité, une fonction secondaire de sécurité.

Le joint d'étanchéité conforme à l'invention permet également de mettre en oeuvre une méthode de dépressurisation sécuritaire de l'appareil de cuisson d'aliments sous pression dans lequel il est monté. Au sens de l'invention et compte tenu des phénomènes de disfonctionnement des dispositifs classiques et dédiés de sécurité mentionnés précédemment, on entendra par l'expression « *méthode de dépressurisation sécuritaire d'un appareil de cuisson d'aliments sous pression* » une méthode mettant en oeuvre le déplacement du joint d'étanchéité de l'appareil pour réaliser la dépressurisation dite « *sécuritaire* » lorsque les dispositifs de sécurité primaires et dédiés de l'appareil sont hors d'usage ou rendu inactifs par des causes externes accidentelles.

Ainsi, l'invention concerne également une méthode de dépressurisation sécuritaire d'un appareil de cuisson d'aliments sous pression comprenant une cuve 2 se terminant à sa partie supérieure par un rebord 4 de cuve 2 ainsi qu'un couvercle 5 destiné à être rapporté sur ladite cuve 2 pour définir une enceinte de cuisson, ledit appareil comportant un joint d'étanchéité 20 interposé entre le couvercle 5 et le rebord 4 de cuve 2, ladite méthode comportant une étape de fluage du joint lorsque que la pression à l'intérieur de ladite enceinte de cuisson dépasse un seuil prédéterminé Pₛ de sorte à mettre ladite enceinte de cuisson en communication avec l'extérieur.

Selon l'invention, la méthode de dépressurisation sécuritaire est caractérisée par le fait que le joint étant formé par un talon 21 à partir duquel s'étend au moins une première lèvre 22 comportant une surface d'appui 23 se terminant par une bordure terminale 24 destinée à reposer sur le rebord 4 de cuve 2 afin d'assurer l'étanchéité de ladite enceinte de cuisson, l'étape de fluage du joint s'effectue en deux phases successives incluant d'abord une première phase de déplacement de ladite première lèvre 22 dans un plan sensiblement parallèle au plan général d'extension du rebord 4 de cuve 2, suivi par une seconde phase de déplacement au cours de laquelle la première lèvre 22 fléchit en direction du couvercle 5 pour former un pli S et rompre l'étanchéité alors que la bordure terminale 24 repose toujours sur le rebord 4 de cuve 2.

En effet, et tel qu'illustré en particulier aux figures 3 à 5, les caractéristiques du joint d'étanchéité 20, et en particulier la présence d'ouvertures traversantes 25 situées à distance, ou encore à proximité de la bordure continue 24 (sans toutefois rompre la continuité de la bordure continue 24A) permet de réaliser une méthode de dépressurisation sécuritaire de l'appareil en deux temps ou deux phases :
- dans une première phase la première lèvre 22, sous l'effet de la pression régnant dans l'appareil qui dépasse le seuil prédéterminé Pₛ, se déplace horizontalement (figure 4) en direction radiale externe F2 c'est-à-dire vers l'extérieur de l'enceinte en glissant sur le rebord 4 de cuve 2,
- dans une seconde phase, et successivement, le déplacement de la première lèvre 22 se poursuit et la première lèvre 22 vient fléchir en direction du couvercle (avec une composante sensiblement verticale) pour former un pli en S à proximité de la racine 27, lequel pli en S s'étend sur tout le périmètre du joint en formant un jonc, les ouvertures traversantes 25 étant alors découvertes puisqu'elles ne sont plus en contact avec le rebord 4 de cuve 2. L'étanchéité de l'appareil de cuisson sous pression est alors totalement rompue (figure 5) à l'issue de cette seconde phase, la bordure terminale 24 étant toutefois toujours en appui contre le rebord 4 de cuve 2 à l'issue de la flexion de la première lèvre 22 conduisant à la formation du pli S.

Au cours de cette seconde phase, la première lèvre 22 formant un pli en S présente donc une portion 36 qui fléchit verticalement vers le bas à l'opposé du couvercle 5 alors que la bordure terminale 24 est toujours en contact continu contre le rebord 4 de cuve 2.

La conformation particulière du joint ainsi que la méthode de dépressurisation sécuritaire qui en découle permettent ainsi de libérer l'excès de pression d'une manière particulièrement douce et maitrisée de telle sorte que la fonction de sécurité additionnelle du joint conforme à l'invention est particulièrement fiable.

## Revendications

1. Joint d'étanchéité (20) pour appareil de cuisson d'aliments sous pression, ledit appareil comprenant une cuve (2) se terminant à sa partie supérieure par un rebord (4) de cuve (2) ainsi qu'un couvercle (5) destiné à être rapporté sur ladite cuve (2) pour définir une enceinte de cuisson, ledit joint étant conçu pour être interposé entre le couvercle (5) et le rebord (4) de la cuve (2) afin d'assurer l'étanchéité de ladite enceinte de cuisson et comportant un talon (21) à partir duquel s'étend au moins une première lèvre (22) comprenant une surface d'appui (23) se terminant par une bordure terminale (24) destinée à reposer sur le rebord (4) de cuve (2), ledit joint étant **caractérisé en ce que** la première lèvre (22) est percée d'au moins une ouverture traversante (25) ménagée dans la surface d'appui (23) à distance de la bordure terminale (24) de telle sorte que la ladite première lèvre (22) puisse d'une part reposer sur le rebord (4) de cuve (2) par sa surface d'appui (23) lorsque la pression régnant dans l'enceinte de cuisson ne dépasse pas un seuil prédéterminé (PS) et d'autre part fluer en direction du talon (21) lorsque la pression régnant dans l'enceinte de cuisson dépasse le seuil prédéterminé (PS) de sorte à mettre ladite au moins une ouverture traversante (25) en communication avec l'extérieur de l'enceinte alors que la bordure terminale (24) repose toujours sur le rebord (4) de cuve (2).

2. Joint selon la revendication 1 **caractérisé en ce que** le joint est percé d'une pluralité d'ouvertures traversantes (25).

3. Joint selon la revendication 2 **caractérisé en ce que** les ouvertures traversantes (25) sont réparties à intervalles réguliers sur la totalité de la longueur de la surface d'appui (23).

4. Joint selon la revendication l'une des revendications précédentes **caractérisé en ce que** la ou les ouvertures traversantes (25) ont une forme générale sensiblement oblongue orientée selon la direction de la longueur de la surface d'appui (23).

5. Joint selon la revendication 4 **caractérisé en ce que** la ou les ouvertures traversantes (25) ont une forme générale avec un côté convexe et un côté concave (29), chaque côté étant relié à l'autre par un demi cylindre.

6. Joint selon la revendication 5 **caractérisé en ce que** le côté convexe (28) forme le côté extérieur convexe faisant face au talon (21) et le côté concave (29) forme le côté intérieur concave faisant face à la bordure terminale (24).

7. Joint selon l'une des revendications précédentes **caractérisé en ce que** la première lèvre (22) a une souplesse suffisante et s'étend à partir du talon (21) sur une distance suffisante pour venir fluer en formant un pli en S à partir de sa racine (27) avec le talon (21) tandis que la bordure terminale (24) repose sur le rebord (4) de cuve (2) et que la dite au moins une ouverture traversante (25) forme une section de fuite située entre le rebord (4) de cuve (2) et le couvercle (5).

8. Joint selon l'une des revendications précédentes **caractérisé en ce qu'**il est circulaire ou ovale et comporte quinze ouvertures traversantes (25) sensiblement identiques, d'une longueur hors-tout comprise entre 15 mm et 18 mm.

9. Joint selon l'une des revendications précédentes **caractérisé en ce qu'**il comporte une seconde lèvre (32) s'étendant à partir du talon (21) et destinée à venir en appui contre le couvercle (5).

10. Joint selon l'une des revendications précédentes **caractérisé en ce que** la bordure terminale (24) est bordée par une bordure continue (24A) formant une ligne dépourvue d'encoches ou entailles.

11. Appareil de cuisson d'aliments sous pression **caractérisé en ce qu'**il est équipé d'un joint d'étanchéité (20) conforme à l'une des revendications 1 à 10.

12. Méthode de dépressurisation sécuritaire d'un appareil de cuisson d'aliments sous pression comprenant une cuve (2) se terminant à sa partie supérieure par un rebord (4) de cuve (2) ainsi qu'un couvercle (5) destiné à être rapporté sur ladite cuve (2) pour définir une enceinte de cuisson, ledit appareil comportant un joint d'étanchéité (20) qui est conforme à l'objet de l'une quelconque des revendications 1 à 10 et qui est interposé entre le couvercle (5) et le rebord (4) de la cuve (2), ladite méthode comportant une étape de fluage du joint lorsque la pression à l'intérieur de ladite enceinte de cuisson dépasse un seuil prédéterminé (PS) de sorte à mettre ladite enceinte de cuisson en communication avec l'extérieur et étant **caractérisée en ce que**, ledit joint étant formé par un talon (21) à partir duquel s'étend au moins une première lèvre (22) comprenant une surface d'appui (23) se terminant par une bordure (10) terminale destinée à reposer sur le rebord (4) de cuve (2) afin d'assurer l'étanchéité de ladite enceinte de cuisson, l'étape de fluage du joint s'effectue en deux phases successives incluant d'abord une première phase de déplacement de ladite première lèvre (22) dans un plan sensiblement parallèle au plan général d'extension du rebord (4) de cuve (2), suivie par une seconde phase de déplacement au cours de laquelle la première lèvre (22) fléchit en direction du couvercle (5) pour former un pli et rompre l'étanchéité alors que la bordure (10) terminale repose toujours sur le rebord (4) de cuve (2).

## Patentansprüche

1. Dichtung (20) für ein Druckkochgerät, wobei das Gerät eine Wanne (2), die an ihrem oberen Teil mit einem Rand (4) der Wanne (2) endet, und einen Deckel (5) umfasst, der dazu bestimmt ist, an der Wanne (2) angebracht zu werden, um einen Garraum zu definieren, wobei die Dichtung eingerichtet ist, um zwischen dem Deckel (5) und dem Rand (4) der Wanne (2) angeordnet zu werden, um die Dichtigkeit des Garraums zu gewährleisten, und einen Absatz (21) umfasst, von der ausgehend sich mindestens eine erste Lippe (22) erstreckt, die eine Auflagefläche (23) aufweist, die in einer Endkante (24) endet, die dazu bestimmt ist, auf dem Rand (4) der Wanne (2) aufzuliegen, wobei die Dichtung **dadurch gekennzeichnet ist, dass** die erste Lippe (22) mit mindestens einer Durchgangsöffnung (25) durchbohrt ist, die in der Auflagefläche (23) beabstandet zu der Endkante (24) derart ausgebildet ist, dass die erste Lippe (22) einerseits auf dem Rand (4) der Wanne (2) durch ihre Auflagefläche (23) aufliegen kann, wenn der Druck, der im Garraum herrscht, einen vorbestimmten Schwellenwert (PS) nicht überschreitet, und andererseits in Richtung des Absatzes (21) verlaufen kann, wenn der Druck, der im Garraum herrscht, den vorbestimmten Schwellenwert (PS) überschreitet, um die mindestens eine Durchgangsöffnung (25) mit der Außenseite des Raumes in Verbindung zu bringen, während die Endkante (24) stets auf dem Rand (4) der Wanne (2) aufliegt.

2. Dichtung nach Anspruch 1, **dadurch gekennzeichnet, dass** die Dichtung mit mehreren Durchgangsöffnungen (25) durchbohrt ist.

3. Dichtung nach Anspruch 2, **dadurch gekennzeichnet, dass** die Durchgangsöffnungen (25) in regelmäßigen Abständen über die gesamte Länge der Auflagefläche (23) verteilt sind.

4. Dichtung nach einem der vorhergehenden Ansprüche, **dadurch gekennzeichnet, dass** die Durchgangsöffnung oder die Durchgangsöffnungen (25) insgesamt eine im Wesentlichen längliche Form aufweisen, die in Richtung der Länge der Auflagefläche (23) ausgerichtet ist.

5. Dichtung nach Anspruch 4, **dadurch gekennzeichnet, dass** die Durchgangsöffnung oder die Durchgangsöffnungen (25) insgesamt eine Form mit einer konvexen Seite und einer konkaven Seite (29) aufweisen, wobei jede Seite durch einen Halbzylinder mit der anderen verbunden ist.

6. Dichtung nach Anspruch 5, **dadurch gekennzeichnet, dass** die konvexe Seite (28) die konvexe Außenseite bildet, die dem Absatz (21) zugewandt ist, und die konkave Seite (29) die konkave Innenseite bildet, die der Endkante (24) zugewandt ist.

7. Dichtung nach einem der vorhergehenden Ansprüche, **dadurch gekennzeichnet, dass** die erste Lippe (22) eine ausreichende Flexibilität aufweist und sich von dem Absatz (21) über einen Abstand erstreckt, der ausreichend ist, um so zu verlaufen, dass er eine S-förmige Falte ausgehend von ihrer Wurzel (27) mit dem Absatz (21) bildet, während die Endkante (24) auf dem Rand (4) der Wanne (2) aufliegt, und dass die mindestens eine Durchgangsöffnung (25) einen Leckageabschnitt bildet, der zwischen dem Rand (4) der Wanne (2) und dem Deckel (5) angeordnet ist.

8. Dichtung nach einem der vorhergehenden Ansprüche, **dadurch gekennzeichnet, dass** sie kreisförmig oder oval ist und fünfzehn im Wesentlichen identische Durchgangsöffnungen (25) mit einer Gesamtlänge zwischen 15 mm und 18 mm aufweist.

9. Dichtung nach einem der vorhergehenden Ansprüche, **dadurch gekennzeichnet, dass** sie eine zweite Lippe (32) aufweist, die sich von dem Absatz (21) erstreckt und dazu bestimmt ist, an dem Deckel (5) in Anlage zu kommen.

10. Dichtung nach einem der vorhergehenden Ansprüche, **dadurch gekennzeichnet, dass** die Endkante (24) von einer durchgehenden Kante (24A) umrandet ist, die eine Linie ohne Kerben oder Einschnitte bildet.

11. Druckkochgerät, **dadurch gekennzeichnet, dass** es mit einer Dichtung (20) nach einem der Ansprüche 1 bis 10 ausgestattet ist.

12. Verfahren zur sicheren Druckreduzierung eines Druckkochgeräts, umfassend eine Wanne (2), die an ihrem oberen Teil mit einem Rand (4) der Wanne (2) endet, und einen Deckel (5), der dazu bestimmt ist, an der Wanne (2) angebracht zu werden, um einen Garraum zu definieren, wobei das Gerät eine Dichtung (20) aufweist, die dem Gegenstand von einem der Ansprüche 1 bis 10 entspricht und die zwischen dem Deckel (5) und dem Rand (4) der Wanne (2) angeordnet ist, wobei das Verfahren einen Schritt des Fließens der Dichtung aufweist, wenn der Druck im Inneren des Garraums einen vorbestimmten Schwellenwert (PS) überschreitet, derart, dass der Garraum mit der Außenseite in Verbindung gebracht wird, und **dadurch gekennzeichnet ist, dass** die Dichtung, die durch einen Absatz (21) gebildet wird, von dem ausgehend sich mindestens eine erste Lippe (22) erstreckt, die eine Auflagefläche (23) aufweist, die in einer Endkante (10) endet, die dazu bestimmt ist, auf dem Rand (4) der Wanne (2) zu ruhen, um die Dichtigkeit des Garraums zu gewährleisten, der Schritt des Fließens der Dichtung in zwei aufeinanderfolgenden Phasen erfolgt, die zunächst eine erste Verschiebungsphase der ersten Lippe (22) in einer Ebene aufweisen, die im Wesentlichen parallel zur allgemeinen Erstreckungsebene des Randes (4) der Wanne (2) ist, auf die eine zweite Verschiebungsphase folgt, während der sich die erste Lippe (22) in Richtung des Deckels (5) biegt, um eine Falte zu bilden und die Dichtung zu brechen, während die Endkante (10) weiterhin auf dem Rand (4) der Wanne (2) aufliegt.

## Claims

1. A sealing gasket (20) for a food pressure-cooking appliance, said appliance comprising a bowl (2) ending at its upper part with a flange (4) of bowl (2), as well as a lid (5) intended to be added on said bowl (2) to define a cooking chamber, said gasket being designed to be interposed between the lid (5) and the flange (4) of the bowl (2) to ensure the tightness of said cooking chamber and including a heel (21) from which extends at least one first lip (22) comprising a bearing surface (23) ending with a terminal edge (24) intended to rest on the flange (4) of the bowl (2), said gasket being **characterized in that** the first lip (22) is pierced with at least one through-opening (25) arranged in the bearing surface (23), remote from the terminal edge (24), such that said first lip (22) can, on the one hand, rest on the flange (4) of the bowl (2) through its bearing surface (23) when the pressure inside the cooking chamber does not exceed a predetermined threshold (PS), and on the other hand, creep towards the heel (21) when the pressure inside the cooking chamber exceeds the predetermined threshold (PS), so as to place at least one through-opening (25) in communication with the outside of the chamber, whereas the terminal edge (24) rests on the flange (4) of the bowl (2).

2. The gasket according to claim 1, **characterized in that** the gasket is pierced with a plurality of through-openings (25).

3. The gasket according to claim 2, **characterized in that** the through-openings (25) are distributed at regular intervals over the whole length of the bearing surface (23).

4. The gasket according to any one of the preceding claims, **characterized in that** the through-opening(s) (25) have a substantially oblong genera! shape oriented along the direction of the length of the bearing surface (23).

5. The gasket according to claim 4, **characterized in that** the through-openings (25) have a general shape with a convex side and a concave side (29), each side being connected to the other one by a half-cylinder.

6. The gasket according to claim 5, **characterized in that** the convex side (28) forms the outer convex side facing the heel (21) and the concave side (29) forms the inner concave side facing the terminal edge (24).

7. The gasket according to any one of the preceding claims, **characterized in that** the first lip (22) has a sufficient flexibility and extends from the heel (21) over a distance sufficient so that it creeps and forms a S-fold from its root (27) with the heel (21), whereas the terminal edge (24) rests on the flange (4) of the bowl (2) and said at least one through-opening (25) forms a leak section located between the flange (4) of the bowl (2) and the lid (5).

8. The gasket according to any one of the preceding claims, **characterized in that** it is circular or oval and includes fifteen substantially identical through-openings (25), of a total length comprised between 15 mm and 18 mm.

9. The gasket according to any one of the preceding claims, **characterized in that** it includes a second lip (32) extending from the heel (21) and intended to come in rest against the lid (5).

10. The gasket according to any one of the preceding claims, **characterized in that** the terminal edge (24) is lined with a continuous edge (24A) forming a line with no grooves or notches.

11. A food pressure-cooking appliance **characterized in that** it is equipped with a sealing gasket (20) according to any one of claims 1 to 10.

12. A method for secure depressurization of a food pressure-cooking appliance comprising a bowl (2) ending at its upper part with a flange (4) of bowl (2), as well as a lid (5) intended to be added on said bowl (2) to define a cooking chamber, said appliance comprising a sealing gasket (20) which is in conformity with the subject-matter of any one of claims 1 to 10 and which is interposed between the lid (5) and the flange (4) of the bowl (2), said method including a step of gasket creep when the pressure inside said cooking chamber exceeds a predetermined threshold (PS) so as to place said cooking chamber in communication with the outside and being **characterized in that**, said gasket being formed by a heel (21) from which extends at least one first lip (22) comprising a bearing surface (23) ending with a terminal edge (10) intended to rest on the flange (4) of the bowl (2) to ensure the tightness of said cooking chamber, the step of gasket creep is made in two successive phases including firstly a first phase of displacement of said first lip (22) in a plane substantially parallel to the general plane of extension of the flange (4) of the bowl (2), followed by a second phase of displacement during which the first lip (22) bends towards the lid (5) to form a fold and to break the tightness whereas the terminal edge (10) still rests on the flange (4) of the bowl (2),
